# EUROPÄISCHE PATENTSCHRIFT

(11) **EP 0 803 966 B1**
(45) Veröffentlichungstag und Bekanntmachung des Hinweises auf die Patenterteilung: **23.02.2005**
(21) Anmeldenummer: 97106044.7
(22) Anmeldetag: 12.04.1997
(51) Int. Cl.: H02M 3/28

(54) **Netzteil für ein Gerät mit Standby-Betrieb**
Power supply for an apparatus with standby operation
Alimentation de puissance avec fonctionnement en mode veille

(30) Priorität: 23.04.1996 DE 19616115; 18.12.1996 DE 19652604
(43) Veröffentlichungstag der Anmeldung: 29.10.1997
(73) Patentinhaber: DEUTSCHE THOMSON-BRANDT GMBH, 78048 Villingen-Schwenningen (DE)
(72) Erfinder: Roth, Harald, 78087 Mönchweiler (DE); Riesle, Thomas, 78147 Vöhrenbach (DE); Rehm, Markus, 78052 Villingen-Schwenningen (DE); Rodriguez-Duran, José I., 78050 Villingen-Schwenningen (DE); Rilly, Gerard, 78089 Unterkirnach (DE)

(56) Entgegenhaltungen:
- EP-A- 0 610 700
- DE-A- 4 431 783
- US-A- 5 036 261
- US-A- 5 353 215

## Beschreibung

Die Erfindung geht aus von einem Netzteil für ein Gerät mit Standby-Betrieb, auch Bereitschaftsbetrieb genannt. Geräte dieser Art sind beispielsweise Fernsehgeräte oder Videorecorder, bei denen bestimmte Stufen, z. B. ein Infrarotempfänger und ein Mikroprozessor, während des Standby-Betriebes aktiv sind, um Infrarotsignale einer Fernbedienung empfangen und auswerten zu können. Da der Mikroprozessor bereits eine Leistung von etwa 750 Milliwatt benötigt, und Schaltnetzteile im Standby-Betrieb eine schlechte Effizienz aufweisen, besitzen Schaltnetzteile dieser Art im Standby-Betrieb einen Energieverbrauch von etwa 5 bis 10 Watt und mehr.

Zur Verringerung der Verlustleistung im Standby-Betrieb ist aus der EP 0 610 700 A1 ein Schaltnetzteil bekannt, das einen dritten Betrieb, einen sogenannten Ökobetrieb, aufweist. In diesem Betrieb ist nur der Infrarotempfänger und ein an dessen Ausgang angeschlossenes Filter mit Betriebsspannung versorgt. Hierfür wird ein Akku verwendet, der während des Betriebes regelmäßig wieder aufgeladen wird.

In der US 5,353,215 und der US 5,036,261 sind Netzteile beschrieben, die zusätzlich zu einem Schaltnetzteil für einen Normalbetrieb eines Gerätes ein separates, lineares Netzteil für einen Stand-by Betrieb aufweisen.

Der Erfindung liegt die Aufgabe zugrunde, ein Netzteil der eingangs genannten Art anzugeben, das im Standby-Betrieb einen sehr geringen Verbrauch aufweist und zudem die Unzulänglichkeiten eines Akkubetriebes vermeidet.

Diese Aufgabe wird durch die im Anspruch 1 angegebene Erfindung gelöst. Vorteilhafte Weiterbildungen der Erfindung sind in den Unteransprüchen angegeben.

Gemäß der Erfindung wird zusätzlich zu einem Hauptschaltnetzteil ein separates Schaltnetzteil allein für den Standby-Betrieb verwendet. Da dieses im Standby-Betrieb nur wenige Komponenten mit Leistung versorgt, kann es sehr kompakt aufgebaut werden. So kann es insbesondere mit reduzierter Betriebsspannung betrieben werden, womit seine eigene Verlustleistung minimiert wird.

Da das separate Schaltnetzteil für eine geringe Betriebsspannung von nur 36 V ausgelegt ist, eine sehr geringe Leistungsaufnahme aufweist und nur wenige Komponenten benötigt, ist das gesamte Netzteil kostengünstiger als das Schaltnetzteil der EP 0 610 700 A1. Auch ein separates lineares Netzteil für den Standby-Betrieb wäre nicht kostengünstiger. Das separate Schaltnetzteil kann zudem noch zur Übertragung von Regelsignalen von der Sekundärseite zur Primärseite genutzt werden.

Die Eingangsspannung des separaten Schaltnetzteiles wird durch mindestens ein strombegrenzendes Bauteil, z. B. einen Kondensator, reduziert, so daß es sehr hochohmig wirkt zur Reduzierung der Verlustleistung.

Im Standby-Betrieb betreibt das separate Schaltnetzteil nur einen Infrarotempfänger auf der Sekundärseite, eine diesem nachgeordnete Schaltung zur Erkennung von empfangenen Infrarotimpulsen und den Start-Oszillator des Hauptschaltnetzteiles, eventuell noch eine Leuchtdiode zur Betriebsanzeige. Durch diese Maßnahme verbraucht das gesamte Netzteil im Standby-Betrieb nur 100 mW. Das Hauptschaltnetzteil wird mit allein 4 mW in Bereitschaft gehalten. Die Leuchtdiode zur Betriebsanzeige benötigt nur 3 mW, da sie mit der hohen Schaltfrequenz, ca. 100 kHz, des Standby-Schaltnetzteiles betrieben wird. Bei dieser Schaltfrequenz besitzt die Leuchtdiode eine sehr gute Energieausnutzung.

Anwendungen für dieses Netzteil geben sich insbesondere für Fernsehgeräte, Videorecorder, Satellitenempfänger, Stereoanlagen und prinzipiell alle Geräte mit Standby-Betrieb und Fernbedienung. Bei diesem geringen Verbrauch kann ein Fernsehgerät auch über längere Perioden im Standby-Betrieb angelassen werden, es verbraucht beispielsweise in einem Jahr Standby-Betrieb gerade etwa eine Kilowattstunde.

Während des Standby-Betriebes kann vorteilhafterweise der Oszillator und die Treiberstufe des Hauptschaltnetzteiles in Bereitschaft gehalten werden. Hierdurch erreicht das Hauptschaltnetzteil nach einer kurzen Anlaufphase seinen Normalbetrieb und kann insbesondere den zur Auswertung von Infrarotsignalen der Fernbedienung benötigten Mikroprozessor in kurzer Zeit mit Spannung versorgen. Dies ist vorteilhaft bei Schaltnetzteilen, die in einem weiten Eingangsspannungsbereich von z. B. 90 V bis 265 V arbeiten und die bei geringen Eingangsspannungen eine lange Anlaufphase aufweisen.

Im Normalbetrieb arbeitet das Hautpschaltnetzteil als Sperrwandler und das separate Schaltnetzteil als Durchflußwandler, wobei die Schaltfrequenz des Standby-Schaltnetzteiles durch das Hauptschaltnetzteil synchronisiert wird. Durch die Synchronisierung wird die Regelung der sekundären Ausgangsspannungen des Hauptschaltnetzteils optimal, da hierdurch geringe Spannungsschwankungen dieser Ausgangsspannungen, die aufgrund der Schaltfrequenz unvermeidlich sind, keine Störeffekte verursachen. Das separate Schaltnetzteil besitzt deshalb einen Oszillator, der während des Normalbetriebs als monostabiler Multivibrator und während des Standby-Betriebs als astabiler Multivibrator arbeitet. Das separate Schaltnetzteil ist fest eingestellt und benötigt selbst keine Regelinformation im Standby-Betrieb.

Die Erfindung wird im folgenden beispielhaft anhand von schematischen Zeichnungen näher erläutert. Es zeigen:
- Fig. 1: ein Blockschaltbild des vollständigen Netzteiles;
- Fig. 2a: ein Schaltbild des separaten Schaltnetzteils;
- Fig. 2b: ein Schaltbild des Hauptschaltnetzteils.

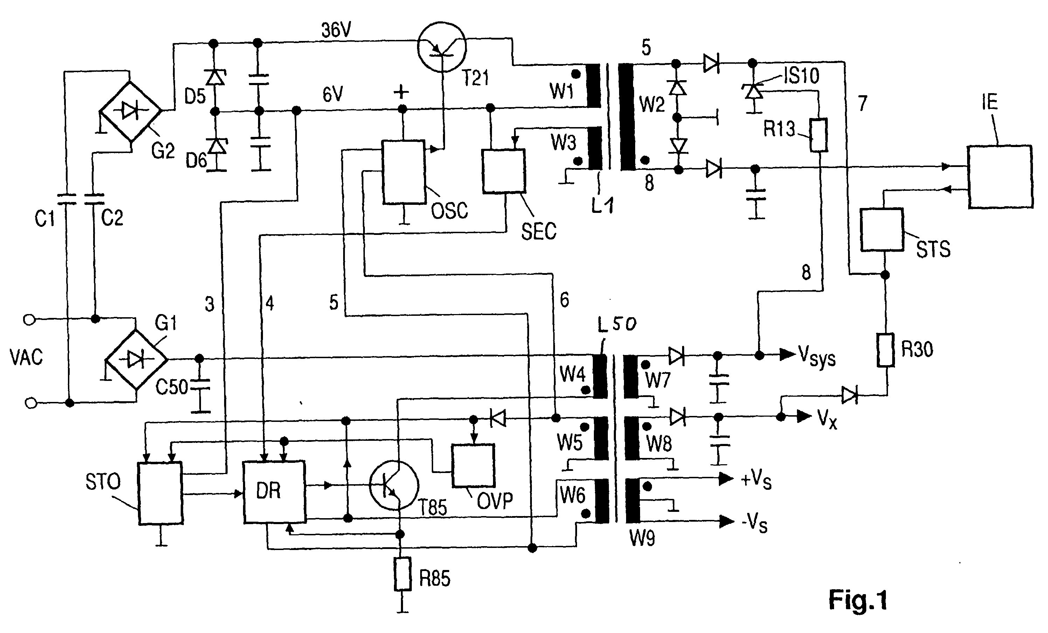

In der Fig. 1 liegt die Wechselspannung VAC des 230 V Netzes an einem ersten Gleichrichter G1 an, der das Hauptschaltnetzteil über einen Kondensator C50 mit einer geglätteten Gleichspannung versorgt. Diese liegt an einer Primärwicklung W4 eines ersten Transformators L50 und einem in Reihe geschalteten Schalttransistor T85. Der erste Transformator L50 enthält Sekundärwicklungen W7, W8 und W9 zur Erzeugung von Betriebsspannungen V_{sys}, Vx und +/-Vs, und auf der Primärseite eine Rückkoppelwicklung W6 und eine Hilfswicklung W5 zur primärseitigen Spannungserzeugung. Der Schalttransistor T85 wird im Nomalbetrieb von einer Treiberschaltung DR angesteuert, die mit der Rückkoppelwicklung W6 verbunden ist. Auf der Primärseite sind zudem noch eine Schaltung OVP als Überspannungsschutz und ein Oszillator STO für den Anlaufbetrieb des Hauptschaltnetzteiles angeordnet. Der Oszillator STO läuft mit einer Frequenz von ca. 1 kHz und bewirkt ein sanftes Hochfahren des Netzteiles nach dem Einschalten. Im Nomalbetrieb schwingt das Hauptschaltnetzteil belastungsabhängig mit einer Frequenz von ca. 60 - 150 kHz.

Für den Standby-Betrieb ist ein separates Schaltnetzteil vorgesehen, das über zwei Kondensatoren C1, C2 mit der Wechselspannung VAC verbunden ist. Diese wirken als verlustlose Blindwiderstände und reduzieren hierdurch die Eingangsspannung für einen Gleichrichter G2 und für das nachfolgende Schaltnetzteil. Deshalb können direkt an den Ausgang des Gleichrichters G2 zwei Zenerdioden D5 und D6 in Serie geschaltet werden zur Erzeugung von Betriebspannungen mit 36 V und 6 V. Das separate Schaltnetzteil enthält weiterhin einen zweiten Transformator L1 mit primärseitigen Wicklungen W1 und W3 und mit einer sekundärseitigen Wicklung W2. Der in Serie zu der Wicklung W1 liegende Schalttransistor T21 wird von einem Oszillator OSC angesteuert, der im Standby-Betrieb fest mit einer Frequenz von 100 kHz schwingt. Es arbeitet sowohl als Durchflußwandler als auch als Sperrwandler und erzeugt über den Anschluß 8 der sekundärseitigen Wicklung W2 eine Vorsorgungsspannung von 5 V für einen Infrarotempfänger IE und über den anderen Anschluß 5 eine Versorgungsspannung für einen Regelverstärker IS10. Der Regelverstärker IS10 dient zur Übertragung von Steuerinformationen und einer Regelinformation von der Sekundärseite auf die Primärseite des zweiten Transformators L1. Diese Informationen werden über eine Regelstufe SEC und eine Verbindung 4 zu dem Treiber DR des Hauptschaltnetzteiles weitergeführt.

An den Ausgang des Infrarotempfängers IE ist eine passive Filterschaltung STS angeschlossen, die auf Fernbedienimpulse einer entsprechenden Infrarotfernbedienung abgestimmt ist. Bei Erkennung von Fernbedienimpulsen gibt sie ein Signal weiter, das über den Regelverstärker IS10 und die Regelstufe SEC das Hauptschaltnetzteil einschaltet.

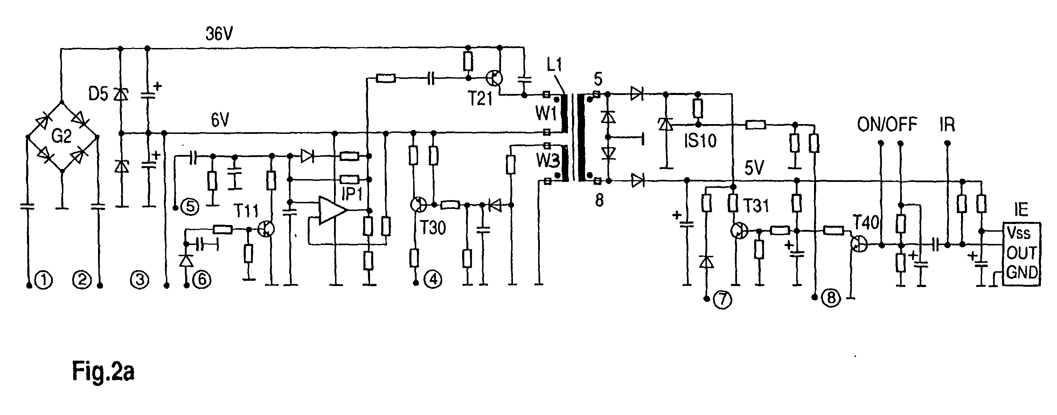

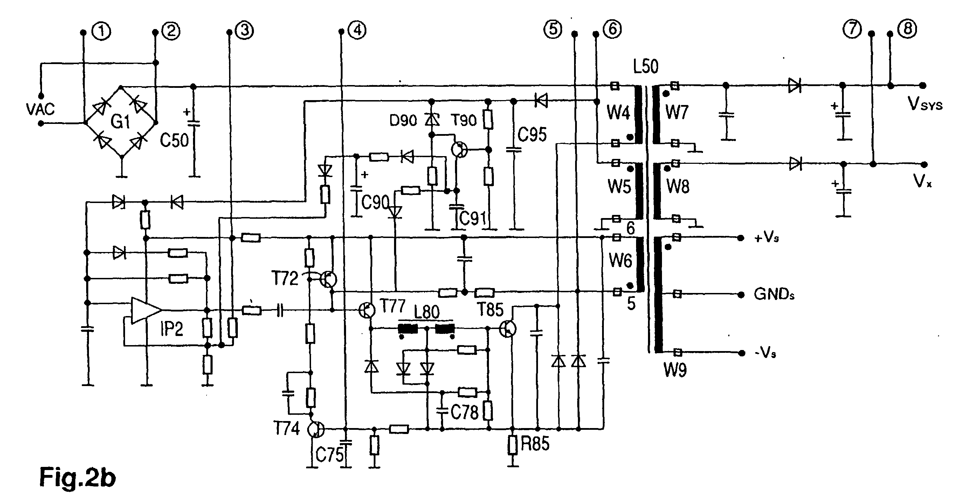

Der Oszillator OSC des separaten Schaltnetzteiles ist über elektrische Verbindungen 5 und 6 mit dem Hauptschaltnetzteil verbunden, durch das er im Normalbetrieb synchronisiert wird. Dies wird anhand der Figuren 2a und 2b nachfolgend näher erläutert.

In der Fig. 2a ist das separate Schaltnetzteil mit seinen einzelnen Bauteilen dargestellt. Es ist über elektrische Verbindungen 1 bis 8 mit dem Hauptschaltnetzteil, dargestellt in der Fig. 2b, verbunden. Identische Bauteile sind in der Fig. 1 und den Figuren 2a und 2b gleich bezeichnet.

Der Schalttransistor T21 in der Fig. 2a wird durch einen Operationsverstärker IP1 angesteuert, der als Oszillator beschaltet ist und einen sehr geringen Energieverbrauch aufweist.

Über den Anschluß 8 des zweiten Transformators L1 wird eine geglättete Gleichspannung von 5 Volt zum Betrieb des Infrarotempfängers IE erzeugt. Dessen Ausgangssignale werden zum einen über einen Anschluß IR an einen nicht dargestellten Mikroprozessor weitergeleitet und dienen gleichzeitig zum Anschalten des Hauptschaltnetzteiles, wenn sich das Netzteil im Standby-Betrieb befindet.

Im Standby-Betrieb ist der Transistor T31 leitend. Bei Erkennung von Infrarotsignalen gibt der Infrarotempfänger IE an seinem Ausgang OUT Signale ab, die den Transistor T40 durchschalten und damit ebenfalls den Transistor T31 sperren. Hierdurch wird über den Transformator L1 ein Signal an das Hauptschaltnetzteil weitergegeben, das dieses einschaltet. Ein- und Ausschaltsignale können außerdem über weitere Anschlüsse On/Off, die beispielsweise mit einem Videorecorder oder einer Scart-Buchse verbunden sind, zugeführt werden. Über einen Anschluß 7 wird im Normalbetrieb vom Hauptschaltnetzteil aus eine Spannung an der Kathode des Fehlerverstärkers IS10 angelegt, die den Normalbetrieb aufrecht erhält.

Im folgenden wird die Funktionsweise des Hauptschaltnetzteiles anhand der Fig. 2b beschrieben. Es wird selbstschwingend betrieben, wobei es eine positive Rückkopplung über die Wicklung W6 des ersten Transformators L50 erhält. Die Amplitude des Kollektorstromes des Schalttransistors T85 wird über einen Widerstand R85 überwacht, um die Ausgangsspannungen V_{sys}, Vx und +/- Vs konstant zu halten. Die Schaltfrequenz des Hauptschaltnetzteiles variiert aufgrund der ausgangsseitigen Belastung, der angelegten Spannung VAC oder auf Grund von magnetischen Eigenschaften des ersten Transformators L50. Der Schalttransistor T85 wird in einem Modus betrieben, bei dem dieser gesperrt wird, wenn seine Kollektorspannung in einem Minimum liegt. Hierdurch werden Schaltverluste erheblich verringert. Diese Betriebsart ist bereits in der früheren Anmeldung DE 44 31 783 A1 ausführlich beschrieben und wird deshalb hier nicht im einzelnen erläutert. Durch diese Betriebsart wird außerdem eine komplette Energieübertragung im Sperrwandlermodus erreicht, so daß durch die Stromkontrolle automatisch ein Überlastungsschutz erzielt wird.

Der Basisstrom des Schalttransistors T85 wird über eine Drossel L80 in der Weise begrenzt, daß er proportional zu dessen Kollektorstrom ist. Die Funktionsweise dieser Drossel L80 ist bereits in der früheren Anmeldung DE 196 02 556 A1 beschrieben und wird deshalb hier nicht näher erläutert. Durch diese Ansteuerung wird eine sehr effiziente und schnelle Schaltaktion bewirkt, die bis zu Schaltfrequenzen von 150 KHz zuverlässig arbeitet.

Ist der Schalttransistor T85 durchgeschaltet, so wird über einen Anschluß 6 der Wicklung W6, Transistor T77 und Drossel L80 der Basisstrom für den Schalttransistor T85 erzeugt. Durch einen Kondensator C78 wird das Einschalten des Schalttransistors T85 unterstützt. Das Sperren des Schalttransistors T85 wird über einen Kondensator C75 und über Transistoren T74, T72 und T77 bewirkt. Wenn der Transistor T77 steilflankig gesperrt wird, wird über die Drossel L80 ein negativer Basisstrom erzeugt, der den Schalttransistor T85 sperrt.

Der Oszillator STO der Fig. 1 ist in der Fig. 2b mittels eines beschalteten Operationsverstärkers IP2 realisiert. Im Anlaufbetrieb nach einem Einschalten schaltet er den Transistor T77 mit einer Schaltfrequenz von etwa 1 KHz durch, bis das Hauptschaltnetzteil in den höherfrequenten, selbstschwingenden Normaletrieb übergeht.

Das Hauptschaltnetzteil wird während des Standby-Betriebes abgeschaltet, da ein Verbrauch von unter einem Watt bei einem etwas größer dimensionierten Schaltnetzteil kaum zu bewerkstelligen ist. Die An- und Aus-Befehle hierfür werden an der Wicklung W2 des zweiten Transformators L1 von der Transistorstufe T30 abgegriffen und über die Verbindung 4 zu der Treiberstufe DR, Fig. 1, bzw. Kondensator C75, Fig. 2b, weitergeführt. Im einzelnen wird hierbei der Transistor T74 in der Fig. 2b gesteuert: dieser wird durch ein Aussignal (Pegel: hoch) durchgeschaltet, wodurch ebenfalls Transistor T72 durchgeschaltet wird, der dann den Treibertransistor T77 sperrt.

Im Standby-Betrieb ist nur der beschaltete Operationsverstärker IP2 und die Transistorstufe T74 über die Verbindung 3 und 4 in Betrieb. Die Bauteile dieser Stufen sind so dimensioniert, daß die gesamte Leistungsaufnahme des Hauptschaltnetzteiles im Standby-Betrieb nur 4 Milliwatt beträgt. - Die hier an Hand der Fig. 2b erläuterte Ausführung ist nur ein bevorzugtes Ausführungsbeispiel um den Stromverbrauch minimal zu halten. Andere Ausführungsbeispiele hierfür sind im Rahmen des Schutzumfanges der Ansprüche denkbar.

Im Normalbetrieb wird die Betriebsspannung V_{sys} stabilisiert, die beispielsweise zur Ablenkung in einem Fernsehgerät verwendet werden kann. Diese Spannung wird über die Verbindung 8 abgegriffen und über einen Spannungsteiler auf den Steuereingang des Fehlerverstärkers IS10, in diesem Ausführungsbeispiel eine variable Zenerdiode TL431, angelegt. Je höher die Spannung V_{sys} ist, um so höher ist der Strom von der Kathode zur Anode und entsprechend höher ist der "Flyback"-Strom für den Transformator L1. Am Anschluß 5 des Transformators L1 steht im "Flyback" eine Spannung an, die durch den Fehlerverstärker IS10 mehr oder weniger stark belastet wird entsprechend der Betriebsspannung V_{sys}. Diese Belastung ist auf der primären Seite an der Wicklung W3 abgreifbar: Je höher die sekundärseitige Belastung ist, um so niedriger ist die "Flyback"-Spannung an der Wicklung W2. Dieses Regelsignal wird über die Transistorstufe T30 und Verbindung 4 wie vorangehend beschrieben an das Hauptschaltnetzteil weitergegeben. Über den Schalttransistor T85 und den Transformator L1 ist dann die Regelschleife geschlossen. Durch diese direkte Regelung wird eine sehr hohe Regelverstärkung erreicht.

Um eine sehr stabile Regelverstärkung zu erhalten, wird die Schaltfrequenz des separaten Schaltnetzteiles während des Normalbetriebes durch das Hauptschaltnetzteil synchronisiert. Über Anschlüsse 5 und 6 wird sowohl die Schaltfrequenz als auch das Pulsbreitenverhältnis im separaten Schaltnetzteil gesteuert. Über Verbindung 6 wird der Transistor T11 durchgeschaltet, wodurch der Ausgang des Operationsverstärkers IP1 auf hohe Spannung geht (5,6 V). Wenn der Schalttransistor T85 des Hauptschaltnetzteiles sperrt, entsteht am Anschluß 5 der Wicklung W6 ein positiver Spannungspuls, der über Verbindung 5 an den negativen Eingang des Operationsverstärkers IP1 weitergeführt wird und dessen Ausgang auf Null schaltet.

Für Schaltnetzteile ist eine Schutzschaltung in Bezug auf Überspannungen notwendig. Diese ist realisiert durch eine Transistsorstufe TP90, Fig. 2b, (OVP in Fig. 1), die die Spannung der primärseitigen Wicklung W5 überwacht und im Falle einer Überspannung auf die Treiberstufe des Schalttransistors T85 einwirkt. Wenn die Normalspannung der Wicklung W5 um 10% zu hoch liegt, dann wird der Schalttransistor T85 für eine kurze Zeitspanne komplett abgeschaltet. Danach läuft das Hauptschaltnetzteil wieder hoch und geht wieder in den Normalbetrieb über, wenn die Überspannung nur kurzzeitig aufgetreten war. Besteht die Überspannung dagegen weiter, so wird der Schalttransistor TP85 erneut abgeschaltet, wenn obige Grenzspannung erreicht wird, und dieser Abschaltzyklus wird solange beibehalten, wie die Überspannung besteht. Diese Schaltung hat folgende Vorteile gegenüber bekannter Schaltungen, die die Ausgangsspannung bei einem hohen Wert begrenzen: Durch das zyklische An- und Ausschalten wird die Belastung der Bauteile niedrig gehalten, zudem wird die effektive Verbrauchsleistung stark reduziert im Überspannungsfall. Werden beispielsweise die Ausgangsspannungen bei einem höheren Spannungswert von 10% nur begrenzt, so müssen auch für diesen Spannungwert bestimmte Sicherheitsbedingungen eingehalten werden. Dies führt zu an sich nicht notwendigen Mehrkosten.

Die Funktionsweise der Schutzschaltung wird im folgenden näher erläutert: Wenn in einem Fehlerfalle die Ausgangsspannungen V_{sys}, Vx und Vs ansteigen, so würde ebenfalls die Spannung an einem Kondensator C95 auf der Primärseite ansteigen. Ab einem bestimmten Wert, definiert durch die Zenerdiode D90 und den Spannungsteiler parallel zu C95, schaltet der Transistor T90 durch und schickt einen schnellen Stromstoß in die Basis des pnp-Transistors T77. Dieser sperrt und verhindert damit das erneute Einschalten des Schalttransistors T85. Sobald der erste Transformator L50 ausgeschwungen hat, kann das Hautschaltnetzteil nur über den Start-Oszillator (IP2) wieder einschalten. Deshalb wird dieser Start-Oszillator am nichtinvertierenden Eingang über eine größere Zeitkonstante so angesteuert, daß er für eine gewisse Zeit (definiert durch Kondensator C90) nicht schwingt und somit ein Anlaufen des Hauptschaltnetzteils verhindert.

Durch diese lange Unterbrechung fallen alle Ausgangsspannungen am ersten Transformator L50 entsprechend weit ab, so daß der Transistor T90 wieder sperrt und nach einer gewissen Zeitspanne der Kondensator C91 entladen ist. Durch die Verwendung nur einer Transistorstufe T90 wird der Materialaufwand für die äußerst effektive Schutzschaltung sehr gering gehalten. Da sie auf der Primärseite angeordnet ist, und direkt über Transistor T72 auf den Treibertransistor T77 einwirkt, spricht sie zu dem sehr schnell an.

Das anhand der Figuren 2a und 2b näher erläuterte Netzteil ist besonderes geeignet für Anwendungen in einem Fernsehgerät, das mit 230 V betrieben wird. Für andere Anwendungen, beispielsweise in einem Videorecorder oder für andere Eingangsspannungen, sind entsprechende Modifikationen im Rahmen des durch die Ansprüche definierten Schutzumfanges denkbar.

## Patentansprüche

1. Netzteil für ein Gerät mit Standby-Betrieb, das ein Hauptschaltnetzteil für einen Normalbetrieb aufweist, **dadurch gekennzeichnet, dass** das Netzteil zusätzlich zu dem Hauptschaltnetzteil (L50, T85, DR, STO, OVP) ein separates Schaltnetzteil (L1, T21, OSC) für den Standby-Betrieb enthält, und dass das Hauptschaltnetzteil (L50, T85, DR, STO, OVP) über einen Transformator (L1) des separaten Schaltnetzteils (L1, T21, OSC) ein- und ausschaltbar ist.

2. Netzteil nach Anspruch 1, **dadurch gekennzeichnet, dass** die Eingangswechselspannung des separaten Schaltnetzteiles (L1, T21, OSC) mittels mindestens eines strombegrenzenden Kondensators (C1, C2) während des Betriebes reduziert ist zur Reduzierung der Verlustleistung.

3. Netzteil nach Anspruch 1 oder 2, **dadurch gekennzeichnet, dass** eine Betriebsspannung (Vsys) des Hauptschaltnetzteiles (L50, T85, DR, STO, OVP) über ein sekundärseitiges Regelsignal stabilisiert ist, dass dieses Regelsignal über den Transformator (L1) des separaten Schaltnetzteiles während des Normalbetriebs auf die Primärseite übertragen wird, und dass die Arbeitsfrequenz des separaten Schaltnetzteiles (L1, T21, OSC) während des Normalbetriebs durch das Hauptschaltnetzteil (L50, T85, DR, STO, OVP) synchronisiert ist.

4. Netzteil nach Anspruch 1, **dadurch gekennzeichnet, dass** das separate Schaltnetzteil (L1, T21, OSC) einen Oszillator (OSC) enthält, der während des Standby-Betriebes als astabiler Multivibrator arbeitet und während des Normalbetriebs als monostabiler Multivibrator arbeitet.

5. Netzteil nach Anspruch 1, 2 oder 3, **dadurch gekennzeichnet, dass** es Mittel enthält (3), über die das Hauptschaltnetzteil (L50, T85, DR, STO, OVP) mit dem separaten Schaltnetzteil verbunden ist, und die bewirken, dass der Oszillator (STO) des Hauptschaltnetzteiles (L50, T85, DR, STO, OVP) während des Standby-Betriebs in Funktion ist.

6. Netzteil nach einem der vorangehenden Ansprüche, **dadurch gekennzeichnet, dass** während des Standby-Betriebes nur ein Infrarotempfänger (IE), eine nachfolgende Schaltung zur Erkennung von empfangenen Infrarotimpulsen (STS) und ein Oszillator (STO) des Hauptschaltnetzteiles (L50, T85, DR, STO, OVP) in Betrieb ist.

## Claims

1. Power supply for an apparatus with standby operation, which has a main switched-mode power supply for normal operation, **characterized in that**, in addition to the main switched-mode power supply (L50, T85, DR, STO, OVP), the power supply contains a separate switched-mode power supply (L1, T21, OSC) for standby operation, and **in that** the main switched-mode power supply (L50, T85, DR, STO, OVP) can be switched on and off via a transformer (L1) of the separate switched-mode power supply (L1, T21, OSC).

2. Power supply according to Claim 1, **characterized in that** the input AC voltage of the separate switched-mode power supply (L1, T21, OSC) is reduced during operation by means of at least one current-limiting capacitor (C1, C2) in order to reduce the power loss.

3. Power supply according to Claim 1 or 2, **characterized in that** an operating voltage (Vsys) of the main switched-mode power supply (L50, T85, DR, STO, OVP) is stabilized via a secondary-side control signal, **in that** this control signal is transmitted to the primary side during normal operation via the transformer (L1) of the separate switched-mode power supply, and **in that** the operating frequency of the separate switched-mode power supply (L1, T21, OSC) is synchronized during normal operation by the main switched-mode power supply (L50, T85, DR, STO, OVP).

4. Power supply according to Claim 1, **characterized in that** the separate switched-mode power supply (L1, T21, OSC) contains an oscillator (OSC), which operates as an astable multivibrator during standby operation and operates as a monostable multivibrator during normal operation.

5. Power supply according to Claim 1, 2 or 3, **characterized in that** it contains (3) means via which the main switched-mode power supply (L50, T85, DR, STO, OVP) is connected to the separate switched-mode power supply and which cause the oscillator (STO) of the main switched-mode power supply (L50, T85, DR, STO, OVP) to function during standby operation.

6. Power supply according to one of the preceding claims, **characterized in that** only an infrared receiver (IE), a downstream circuit for detecting received infrared pulses (STS) and an oscillator (STO) of the main switched-mode power supply (L50, T85, DR, STO, OVP) are operating during standby operation.

## Revendications

1. Bloc d'alimentation pour un appareil fonctionnant en mode veille qui présente un bloc d'alimentation de commutation principal pour un fonctionnement normal, **caractérisé en ce que** le bloc d'alimentation comporte, en plus du bloc d'alimentation de commutation principal (L50, T85, DR, STO, OVP), un bloc d'alimentation de commutation séparé (L1, T21, OSC) pour le fonctionnement en mode veille, et **caractérisé en ce que** le bloc d'alimentation de commutation principal (L50, T85, DR, STO, OVP) peut être activé et désactivé via un transformateur (L1) du bloc d'alimentation de commutation séparé (L1, T21, OSC).

2. Bloc d'alimentation selon la revendication 1, **caractérisé en ce que** la tension alternative d'entrée du bloc d'alimentation de commutation séparé (L1, T21, OSC) est réduite via au moins un condensateur limiteur de courant (C1, C2) pendant le fonctionnement en vue de réduire la puissance dissipée.

3. Bloc d'alimentation selon la revendication 1 ou 2, **caractérisé en ce qu'une** tension de fonctionnement (V_{sys}) du bloc d'alimentation de commutation principal (L50, T85, DR, STO, OVP) est stabilisée via un signal de régulation du côté secondaire, **caractérisé en ce que** ce signal de régulation est transmis sur le côté primaire via le transformateur (L1) du bloc d'alimentation de commutation séparé lors du fonctionnement normal, et **caractérisé en ce que** la fréquence de travail du bloc d'alimentation de commutation séparé (L1, T21, OSC) est synchronisée par le bloc d'alimentation de commutation principal (L50, T85, DR, STO, OVP) pendant le fonctionnement normal.

4. Bloc d'alimentation selon la revendication 1, **caractérisé en ce que** le bloc d'alimentation de commutation séparé (L1, T21, OSC) comporte un oscillateur (OSC) qui fonctionne comme multivibrateur astable lors du fonctionnement en mode veille et comme multivibrateur monostable lors du fonctionnement normal.

5. Bloc d'alimentation selon la revendication 1, 2 ou 3, **caractérisé en ce qu'**il comporte des moyens (3) via lesquels le bloc d'alimentation de commutation principal (L50, T85, DR, STO, OVP) est relié au bloc d'alimentation de commutation séparé (L1, T21, OSC) et que ces moyens font en sorte que l'oscillateur (STO) du bloc d'alimentation de commutation principal (L50, T85, DR, STO, OVP) est actif lors du fonctionnement en mode veille.

6. Bloc d'alimentation selon une des revendications précédentes, **caractérisé en ce que** seuls un récepteur infrarouge (IE), un circuit placé en aval pour la reconnaissance des impulsions infrarouge reçues (STS) et un oscillateur (STO) du bloc d'alimentation de commutation principal (L50, T85, DR, STO, OVP) sont actifs lors du fonctionnement en mode veille.
